# EUROPEAN PATENT APPLICATION

(11) **EP 2 088 748 A1**
(43) Date of publication of application: **12.08.2009**
(21) Application number: 09250291.3
(22) Date of filing: 05.02.2009
(51) Int. Cl.: H04L 29/08, H04W 4/02, H04W 88/04

(54) **System for and method of providing information**

(30) Priority: 07.02.2008 ES 200800332; 07.04.2008 GB 0806290
(71) Applicant: Wilico Wireless Networking Solutions, SA, 08018 Barcelona (ES)
(72) Inventor: Cedó Perpinyà, Josep, 08035 Barcelona (ES); Dalmau Ballester, Marc, 08003 Barcelona (ES); Masó Mas, David, 08553 Seva Barcelona (ES); Gil Lozano, José Manuel, 08820 El Prat de Llobregat (ES); Viaga, Fredrico Heras, 08330 Premia de Mar Barcelona (ES); Pubill, German Munuera, 08195 Mirasol (Sant Cugat dekl Vallés) Barcelona (ES)
(74) Representative: Mabey, Katherine Frances

(57) **Abstract**

A method and system (2) for providing information to a mobile communications device (8), such as a mobile phone (8), is provided. The method comprises providing selection means, such as a button, icon or the like, for enabling selection of information, such as content that a user (4) wishes to receive. The method further comprises providing information, e.g. content, from information providing means (30), such as a server (30) or the like, to a communications means, in response to activation of the selection means. The method further comprises automatically transmitting further information, e.g. content, which may be the same as the original information and/or may be adapted, etc., from the communications means to a mobile communications device (8) such as a mobile phone (8). The communications means preferably comprises an application or other program or the like (preferably for a computer (10), laptop, etc.). Preferably the application is adapted, configured or otherwise enhanced, for example one or more skins, themes or the like is preferably applied to the application.

## Description

The present invention relates to methods of and systems for enabling information to be provided to a device, particularly a mobile communications device. In preferred embodiments of the invention, the information is provided in response to a request made via means intermediate a source of information and the device to which information is to be provided. Furthermore it is preferred that the information is provided automatically from the intermediate means to the mobile communications device in response to the request and/or in response to information being provided to the intermediate means.

It is increasingly more desirable for systems, devices, applications and other means to be able to interact such that a user of one or more of these can view, store, compare, modify, customise or otherwise obtain or use, etc., information from one or more of these sources in a manner, and more specifically using a device or other means, that is convenient for them.

For example, if a user, say, accesses a website and wishes to obtain and store or otherwise use information from that website, the user may wish to retrieve the appropriate information with the intention of transferring the information to a more suitable device or means. In particular, the user may wish to transfer the information to a portable device, particularly a mobile communications device such as a mobile phone, a Blackberry, a personal digital assistant (PDA), a laptop or any other suitable or similar means, such that the information can be stored and taken away for reference at a later time, in a different location, etc.

However, methods and systems in the art for transferring, e.g., website information to a mobile device, particularly to a mobile phone or other small, handheld or "pocket-sized" device, are cumbersome, slow and require the user to repeatedly interact with the system and thus are typically inconvenient and time consuming. This may discourage the user from attempting to retrieve the information they desire.

Furthermore most prior art methods and systems involve additional cost to the user when retrieving the information. For example, some systems present the user with a pointer, such as an address (e.g. an Internet address) that they must enter into their mobile device (usually via a numeric keypad which can be time consuming and awkward) and this address enables the user to connect with a server or the like to obtain the information via a known communications protocol such as wireless application protocol (WAP), general packet radio service (GPRS), etc. However the user typically must pay for the connection, on a time basis and/or based on the size of the download, etc., and so the user may also be discouraged from retrieving information because of the cost. Alternative means for obtaining information may involve systems or protocols that push information to a device of the user, such as SMS, WAP Push, MMS, etc., but it is still necessary for the user to perform multiple interactions to obtain the desired information.

There exists, therefore, scope for improvement in methods and systems for providing information to a mobile communications device, particularly to a mobile phone or other handheld, portable, mobile communications device and particularly information from a source such as a website or other network or Internet information source, or the like.

According to a first broad aspect of the present invention, there is provided a method of providing information to a mobile communications device, the method comprising the steps of:
providing selection means for enabling selection of information;
providing information from information providing means to a communications means in response to activation of the selection means; and
automatically transmitting further information from the communications means to a mobile communications device.

According to a second broad aspect of the present invention, there is provided a system for providing information to a mobile communications device, comprising:
selection means for enabling selection of information;
communication means comprising automatic transmission means; and
information providing means for providing information to the communications means in response to activation of the selection means,
wherein the automatic transmission means is configured to automatically transmit further information to a mobile communications device in response to activation of the selection means and/or in response to provision of information to the communications means.

The present invention provides a method of, and a system four, selecting information and providing further information to a mobile communications device, such as a mobile phone or other handheld, portable device. The further information may be identical to the selected information, or may be related to the selected information but enhanced, modified, or changed in any appropriate manner, as discussed further below.

This is advantageous because the user of the mobile communications device can select or otherwise choose or request information from a source, such as a website for example, that they wish to have sent to their mobile communications device, and the information can be automatically sent to them in response to their request. In preferred embodiments, the information is adapted to the characteristics of the mobile communications device of the user, as discussed below.

This can be achieved by activating selection means, which initiates provision or transfer of information, preferably information related to the selection made by the user, to a communication means, which may be an application running on (or that is capable of running on) a, for example, personal computer (PC) or laptop, etc. The communication means may be the application or may comprise the application and the device on which it is run, e.g. the PC or laptop. The communication means then automatically transfers further information to the mobile communications device, in response either to the request for (i.e. selection of) the information, and/or in response to the communication means receiving the information related to the selection made by the user. Thus the user's mobile communications device automatically and rapidly receives the desired information in response to the user selecting the information they would like to receive, without it being necessary for the user to take any further steps.

Furthermore, by providing the information to, effectively, an intermediate device (e.g. to the communication means if the communication means comprises a PC or the like, or to the PC or the like that the communications means is operable on if the communication means comprises an application or program) the user can avoid any additional costs involved in retrieving the information because the intermediate device may be able to provide the information to the mobile communications device via a communication format or protocol that has no additional associated cost, as discussed in more detail below.

The selection means for enabling selection of information can be any suitable means. Preferably the selection means comprises a button, link or other selectable icon or device that can be activated by a user. In particularly preferred embodiments, where the user wishes to select information to be, for example, downloaded from a website, the selection means comprises a button or other icon or link that can be selected via an external or physical device, such as a mouse or other cursor controlling means, or by any other suitable means. Thus the user can "click" on the button, link or the like, to select the information to be provided to their mobile communications device such as a mobile phone. The selection means may be a physical and/or a virtual means.

The selection means may be provided as a separate entity, application, means or the like. Preferably however the selection means is comprised within or is available for use or other interaction with the communication means.

The communication means can be any suitable means capable of communicating with information providing means and also capable of communicating with a mobile communications device such as a mobile phone. Reference to the capability of the communication means to communicate with other means includes the means per se being able to enact communications (in examples where the communication means comprises a PC or other computer device) and also includes the means interacting with other means to effect the communications (in examples where the communications means comprises an application or program, etc., that is for running on a PC or other computer or the like).

In preferred embodiments the selection means is a part of, or is available for use and integration with, the communication means. For example, if the communication means is an application running, for example on a PC, the selection means may be a button or other icon that can be represented on the PC by the application, or by any other suitable application (e.g. a standard web browser application or the like). The button, etc., may be provided by the application and/or may be provided by a server or other device remote from the PC and the application, but that is displayed on the PC preferably by the application and/or by an existing application such as a web browser.

This arrangement is advantageous because the selection means can be provided to the user at their locality, e.g. via the PC at which they are, for example, browsing a website. It is also or alternatively possible for the selection means to be provided by a different source, such as by a local customer server and/or by a further remote server such as a system administration server or the like. The selection means can therefore be updated, changed or otherwise modified dynamically and can be activated (such that the user can "operate" the selection means) or can be rendered inactive if, for example, it is desired to prevent the user from activating the selection means. This may be desirable for systems or the like where the website host or business, for example, is required to have a licence to enable users to download information from their website but, for example, their licence(s) have been exceeded or have expired, etc. Thus a fully controllable system is provided that can be hosted and controlled from a remote server if desired. In some embodiments, both active and inactive links are shown to the user (but only active links may be activated), thus showing the user what they could obtain if the inactive links are made active.

The information providing means can be any suitable means for providing information to the communication means. The information providing means preferably comprises a server or the like, such as a local server (e.g. a server on the site of, for example, a customer of the system, e.g. a business) or a remote server, such as a systems administration server, or any combination of these.

In preferred embodiments, the information providing means comprises a customer server that a user can access, for example, via the Internet and that has one or more websites or other means, applications or programs that the user can browse, for example, on their PC or other computer means (via the communications means application and/or via an existing website browser or program). The customer server may also comprise the selection means, and/or the selection means may be provided via the customer server to the user's computer from a server remote from the customer server.

The information providing means, preferably a customer server, may further comprise other information that might be of interest to users accessing the server. For example, if the customer server is, say, a business that wishes to sell items to a user, the customer server may contain a plurality of web pages or web page code which can display and/or offer for download information, images, videos, etc., that the user may wish to view. These are preferably stored on the customer server and may be in any suitable form and format.

Preferably the information comprises one or more multipurpose internet mail extension (MIME) files (e.g. music or other audio (mp3) files, images, videos, text, etc.) or any other suitable format files that preferably are suitable for receipt by and viewing, activation or other use on, a mobile communications device such as a mobile phone, and any other suitable content, or multimedia data, etc. In preferred embodiments, the information comprises mobile applications and the like in various formats, such as Java, Symbian, Windows Mobile Applications, or other suitable formats (e.g. Iphone formats or Google Android, etc.)

In preferred embodiments of the present invention, when a user activates the selection means, for example when the user clicks on a button displayed on a website, the information providing means is prompted to provide information, preferably selected and/or otherwise specific information, to the communication means, which is preferably an application running on, for example, the user's PC. Thus the user is provided at their PC, preferably over a local area network and/or via a wide area network, e.g. the Internet, which communicates the PC with the customer server, with information in response to their request indicated by activation of the selection means.

The information may be any information and may, for example, be generic information that is sent to all user's activating the selection means, and/or could be selected information. Selection of the information could be based on the user's choice, for example the user may be presented with numerous options and could choose what information to select, and the information provided to the communication means is responsive to the user's choice. Selection could also or alternatively be based, for example, on information known or determined about the user, particularly about the user's devices/applications, or on any suitable criteria.

For example, the customer server may be provided with information regarding the type of mobile communications device to which the user wishes information ultimately to be provided. The information may therefore be selected for suitability with that type of mobile communications device. Alternatively or additionally the selected information can be modified to be more appropriate for the type of mobile communications device. For example, if the customer server determines, e.g. from information stored on the user's PC, or from the communication means, or from any other program or source, or from the mobile communications device, etc., the make and/or model of the mobile communications device, then the customer server, for example, could modify the information to be provided to the communications means to be, for example, the right format, size, bit rate, shape, etc., for viewing with the particular mobile communications device.

Furthermore the customer server could, for example, modify or otherwise enhance the information to be provided to the communication means such that the information is customised. For example, the information could be, say, an image with a plain background as default, and the customer server could modify the image to have a customised background. The use of "skins" is well known in the art and the customer server could, for example, apply their own "skin" to the information to be provided to the communication means. The term "skins", for example, means one or more customised images, sounds, animations, etc., configured to represent, e.g., a business or brand, and that enhance other information which is to be displayed and usually have one or more common "themes". These "skins" and "themes" are commonly used as website or operating systems (for e.g. PC and/or mobile communications devices) backdrops, buttons, sounds, images, screensavers, etc.

If the customer server does not have an appropriate skin, theme or the like, or does not apply a skin or theme to the information to be provided to the communications means, then in preferred embodiments the communications means comprises or is provided with one or more default skins or themes which can be applied to the information by the communications means. For example the system or service provider may wish to add their own skin to the information in the absence of the customer adding their specific skin. This advantageously enables the user to be given information about the service provider and could, for example, enable the service provider to inform the user about how to obtain all the benefits of the system, about other websites or the like that have the system, etc.

The theme, skin etc., sent from the customer server could be applied only to the information sent by the communications means to the mobile communications device, or the skin, etc., could instead or additionally be applied to the communications means itself. Thus the display, browser and/or pop-up box(es), etc., of the communications means (e.g. application) displayed to a user on their PC or the like, may be displayed with the appropriate skin applied. The above comments with regards to the information skins also each apply with regard to the application skins.

The particular skins applied to the application and/or the information, etc., may depend on the website being visited by the user, as mentioned above. In preferred embodiments, the particular skins applied may additionally or alternatively be based on other factors. For example, the skins may depend on the website being browsed and also on the particular zone, page or area or the website being viewed, etc.
Thus a customised and enhanced display is provided, in which for example different skins can be applied by different websites and/or different zones of one or more websites, etc.

The information may be any other suitable type of information. For example in preferred embodiments the information comprises one or more applications that are pushed to the mobile communications device and operate thereon.

In preferred embodiments, the application operates or runs on the mobile communications device and is capable of interacting with, for example, the communications means (e.g. the application running on the, e.g. PC). This enables and enhanced interaction experience for the mobile communications device user. In preferred embodiments the application pushed to the mobile communications device comprises means for receiving and displaying audio and/or video streamed or otherwise provided from the communications means (PC application). Therefore, for example, the user can view, e.g. IPTV (Internet Protocol Television) via their mobile communications device, the content being stored either on the communications means (PC application) and/or on the customer server, and/or any other appropriate server, etc. In preferred embodiments, two way communication between the mobile communications device and the PC application and/or the chosen website, customer server, etc., is enabled by the application that is pushed to the mobile communications device.

As discussed above the communication means can be any suitable means capable of communicating with information providing means and with a mobile communications device such as a mobile phone. Preferably the communications means comprises an application or other program for operation on a PC or other suitable computer or device. In some embodiments, the communications means comprises an application and the PC or other device on which it operates.

In particularly preferred embodiments, the communications means comprises a standalone application or comprises an application that can interact with existing applications of a PC. The application is provided to the PC by any suitable means. For example the user may be instructed to download (e.g. by a website they are browsing and wish to download information from) or assisted with downloading the application, from e.g. the or another website, or the user could apply to or otherwise contact another source to obtain the application. In preferred embodiments however, if the user (i.e. the user's PC or the like) does not already have the appropriate application or other communication means for carrying out the embodiments of the present invention, the communications means is provided to the user's PC or the like in response to any request for information. The communications means (e.g. the application) could be provided to the user's PC automatically in response to activation of the selection means, or the user could be provided with a further selection means offering to provide the user with the application (e.g. a "pop-up" box may offer the user the option to "click" to download and preferably install the application). In preferred embodiments, provision and installation of the communication means (e.g. the application) is automatic in response to activation of the selection means. Thus the user seamlessly obtains the desired communication means at their PC and has it installed without any further action required by them and perhaps without even being aware that it is necessary for the application to be provided and installed.

The communications means, such as an application, can be provided from any suitable source and may, for example, be provided by the customer server. In preferred embodiments, the communication means is provided by a system server that overseas and controls the system. Preferably when the user attempts to request information, but does not already have the communications means at their PC, a "pop-up" box or web page, etc., is automatically activated on their PC offering to direct them to a source for the communications means, e.g. the system server, from which they can obtain, e.g. download, the communications means.

In embodiments where the communications means (if it is an application) is already provided at the user's PC or the like (or embodiments where it has been provided in past interactions), it is particularly preferred for the communications means to automatically be activated as and when necessary and to carry out its function, preferably automatically. Thus when information is sent from, for example, a customer server to the user's PC, the application should automatically activate such that the information is received by the communications means (processed if necessary) and then, preferably automatically, sent to a mobile communications device of the user. If the user has more than one mobile communications device, the communications means is preferably configurable such that the user can state which device(s) the information should be transmitted to and the order of preference, etc.

In preferred embodiments the communications means (e.g. application) is activated when a user selects information that they wish to receive, as discussed above. The application preferably interacts with the source of the information, for example with the website and/or the server containing the website. Preferably the application manages the content of the website/server. For example the application preferably is capable of any one or more of the following: retrieving the desired content for transmission to the mobile communications device; manipulating, updating or otherwise modifying the content of the website or server; providing new or additional information to the website or server; causing the website or server to push information or content to other users registered or otherwise associated with the website, etc.

The communications means may comprise an entire application or the like, capable of carrying out all the necessary functions (information requests, information handling and modification, information transmission, etc.) and/or the communications means may be capable of using one or more existing applications and means. For example, the communications means may be able to operate with existing Bluetooth, USB, IrDA, NFC, Wi-Fi or other communication Application Programming Interfaces (APIs), and/or with online payment APIs, etc. In preferred embodiments, the communications means is universal in that it is capable of executing with all common operating systems such as Windows, Linux, MAC OS, etc. Furthermore in preferred embodiments the communications means is available for development to any suitable party and thus can be amended, modified and otherwise improved.

Thus there is provided a system and method by which a user can obtain information, content, etc., that they desire directly to their mobile communications device, such as a mobile phone, by simply clicking a button, link or other icon offering the information they require. Unlike prior art systems, the user is not required to enter a mobile URL into their mobile communications device, nor to make a WAP or GPRS, etc., connection (which typically incurs a charge), to obtain the information they desire. Rather it is automatically and seamlessly provided to their mobile communications device from a local source with which the mobile communications device can connect (e.g. a PC or the like which is capable of sending content to the mobile communications device) for viewing or other use as and when desired. The user's local device (PC, etc.) thus effectively acts as a bridge between the web page (and the information available from the web page) and the user's mobile communications device (e.g. phone).

The further information transmitted from the communications means to a mobile communications device can, for example and as described above, be the same information provided to the communications means by the information providing means and/or can be enhanced, modified, customised, etc., as also described above.

The further information is transmitted to the mobile communications device in any suitable manner and can be transmitted using one or more suitable protocols and/or communications means. Preferably the information is transmitted to one, more than one or all devices within proximity, e.g. within a particular distance of, the means transmitting or pushing the information. For example, in preferred embodiments, a device is within proximity of the communication means (e.g. an application running on a PC, or the PC and the application combined) if the device is within about 10 metres, or preferably within about 5 metres, or preferably within a few, e.g. 1 to 5 metres of the communication means. References to pushing the information throughout this application cover any suitable means for transmitting the information from the communications means to the mobile communications device, preferable without additional cost to the user, for example by Bluetooth transmission, SMS transmission, WAP push, via cable, etc.

In particularly preferred embodiments, the communications means (or the PC running the application comprising the communications means in some embodiments) comprises means for transmitting the further information to a mobile communications device. Preferably the transmission means comprises any one or more of the following wireless and wired communications means: Bluetooth, Wireless Fidelity (Wi-Fi), Universal Serial Bus (USB), Near Field Communication (NFC) or Infrared Data Association (IrDA) protocols and transmission means. Alternatively or additionally, the information is preferably transmitted via physical means such as a cable connecting the PC or.the like to the mobile communications device. Therefore the communications means/PC is capable of transmitting the further information to any mobile communications device capable of receiving information via any one or more of these transmission means.

In preferred embodiments, the same or similar information, content or the like is pushed to more than one mobile communications devices in proximity of the communications means or PC. Preferably the same content is pushed to the devices, but the information is configured such that the content is configured for compatibility with each device that receives the pushed information. For example, the information may be configured to display the content in different screen formats, sizes etc., dependent on the type of mobile communications device receiving the content, or any other suitable adaptation or modification could be made, preferably dependent on the type of device(s) receiving the information, etc.

The communications means (e.g. an application running on the PC or other device of the user) therefore "pushes" the desired information to the mobile communications device of the user, by any suitable protocol and without cost (i.e. the transaction is free). In preferred embodiments, in addition to pushing the information to the mobile communications device, the application shows or otherwise provides the information (e.g. the content that the user has requested) on the user's PC, or at least a preview of the information, content, etc.

As discussed, the overall system may be operated and controlled by one or more system administration servers. The system administration server(s) are capable of operating the system and preferably carrying out any one or more of the functions discussed herein. In preferred embodiments, the system administration server controls and provides information, etc., to one or more customer servers. For example, the system administration server may control how much information the customer server can allow users to download to their mobile communications devices. In preferred embodiments, this is controlled by licensing each customer server to allow a certain number, amount, etc., of downloads, preferably in a predetermined time period. For example the customer server may be allocated sufficient licensing to allow ten users to download information within a 24 hour period. If the licence is exceeded, formerly active buttons, icons, options, etc., on the customer server website may be rendered inactive until 24 hours has passed, and/or until the customer server requests (and where applicable, pays for) additional licences. The system administration server provides the licences to the customer server on request and, where necessary, when payment is received.

The system administration server in preferred embodiments provides the customer servers with the necessary program code, applications, etc., to enable the customer servers to prepare and make available their websites to users, and in particular to provide the selection means that the user can activate to request information for provision to their mobile communications device.

The system administration server in additional or alternative preferred embodiments may also store and analyse, etc., information about any transactions made by the customer server and/or by users with the customer server. For example, if a user downloads information from the customer sever, the customer server and/or the communications means of the user may send this information to the system administration server (or the system administration server may retrieve this information) for analysis or storage, etc. Thus the system administration server is informed of successful transmissions to a mobile communications device.

References above to applications of, or actions of the customer server are not limiting and any of the steps performed by the customer server and/or any of the information stored thereon may alternatively or also be performed by and/or stored on a remote server, such as a systems administration server, and vice versa.

The present invention as described in the above embodiments can be further enhanced. For example, not only could the user obtain (i.e. download) information from, e.g., websites or other sources, but in preferred embodiments the user could also provide (i.e. upload) information to the websites or other sources. Namely the user can interact with the website via their mobile communications device, rather than just receiving information therefrom. This is thought to be a considerable advantage over known systems for interaction.

For example, in preferred embodiments, the user could upload information, content, etc. directly from their mobile communications device to the customer server, and/or indirectly via their PC, etc. In the latter case, the files, content, etc., can be uploaded to the communications means (e.g. to the specific application) which may automatically or in response to confirmation from the user transmit the content to the customer server, and preferably in an appropriate format for the customer server and its web pages (with any necessary conversion or modification of the content being carried out by the communications means and/or the customer server). This advantageously enables the user to share their personal information, images, videos, audio, etc., with other user's of the system. The user may also be able to further interact with the customer server website even some time later and even if the user is no longer in the vicinity of their PC. For example if the user has downloaded, say, a map to a business premises from a website, and they become lost trying to find the premises they could, for example, enter the name of the nearest street into their mobile communications device which is then uploaded to the customer server and a reply can be sent to the user's mobile communications device with assistance and updated information as to how to find the premises.

In preferred embodiments, the user could browse the information (e.g. files) on their mobile communications device and could select an offered option or a file on their device, which is then automatically uploaded from the mobile communications device either directly to the customer server or to their PC and then later to the customer server. Furthermore an application could be provided on the mobile communications device for assisting the user in browsing the content on their device.

Still further a customer server could, for example, wish to charge the end user or require payment for the services they receive. Thus the customer server could send an application to the user's mobile communications device and the application could upload payment(s) to the customer server for continued service.

In preferred embodiments, the user can contact and upload/download content from other users' mobile communications devices. For example, a user could upload their content to the customer server and enable this to be shared with other users. In preferred embodiments, an application or the like may be provided at the user's mobile communications device (preferably by the customer and/or systems administration server) that enables the user's mobile communications device to communicate directly or indirectly with other users' mobile communications devices to transfer content to each other.

Therefore various means and methods of interaction between the mobile communications devices of multiple users, via the customer website/server etc., are enabled by the embodiments of the present invention. This is advantageous because, for example social networking is enabled between users having similar tastes, requirements or preferences. A user is able to interact with the website and thus with other users of that website readily, seamlessly and without any of the users incurring additional costs, as all the information, content etc., exchanged between users is sent to the local communications means (e.g. to the application running on their own PC) and is transmitted over, e.g. the Internet, to the particular website and then to another user's local communications means from which it is pushed to their mobile communications device.

Other additional or alternative enhancements to the above embodiments of the present invention are envisaged within the present invention. For example a user may be rewarded, e.g. by obtaining "points" or the like, each time they access and/or receive pushed information, content or the like from a particular website. These points may enable the user to access additional content that is only, for example, offered to users having achieved a predetermined number of points. The user may exchange their points instead or additionally for extra, perhaps more detailed or enhanced, content or the like, or for additional downloads etc., that they otherwise might not be permitted. Thus loyal and/or regular visits to a website are rewarded, in a manner analogous with known systems such as loyalty cards, frequent flyer programmes, etc. This may be enabled at the website (e.g. at the customer server) and/or via the communications means and/or via one or more suitable applications running on(and that may have been pushed by the website to) the mobile communications device.

Another enhancement in preferred embodiments of the present invention comprises a transaction functionality that may be provided to the user. In preferred embodiments, the communication means (application on, e.g. a PC) and/or an application provided to the mobile communications device enables payments or other transactions (e.g. redemption of loyalty rewards, vouchers, etc.) to be made to a website. Thus the mobile communications device is effectively used as a personal debit or credit card.

For example, the user may be offered (via the selection means, e.g. button etc., of a website) an item for purchase. When the user clicks or otherwise activates the button a payment is made for the item. This can be achieved, for example by pushing "payment content" from the website to the mobile communications device. The payment content updates an application on the mobile communications device, such as a purse or money state application, so that the "money" is effectively transferred from the mobile phone to the website, preferably in a return transaction conforming the funds are available. Thus the website can then authorise the purchased item to be sent to the user.

The purchased item may be a physical item requiring courier or postal delivery or collection, and/or may be a virtual item. For example, the user may purchase a virtual product, e.g. a ticket such as a cinema ticket or a train ticket, etc. The ticket is preferably transferred to user's mobile communications device from the website and via the communications means such that the ticket is then stored on the mobile communications means and can then be redeemed at the appropriate time and place, e.g. on entry to the cinema, simply by the user having the mobile communications device with them (and preferably capable of completing a transaction to redeem the ticket at the destination. Such a transaction preferably comprises one or more NFC transactions. Any other suitable, virtual items can be pushed to the mobile communications device, such as music (mp3 files etc.), videos, credit for further transactions, vouchers, etc.

In any of the above embodiments, the present invention may be further enhanced such that any information, content, etc., uploaded from the user's mobile communications device is specifically and automatically directed to the intended customer server or the like. This can be achieved in preferred embodiments by the communication means (and/or any application on the user's mobile communications device) having sufficient information to automatically direct the upload. In some embodiments the information itself contains the necessary pointers or directing means. Therefore the user does not need to enter any URL, address or other direction means for the content to reach its intended destination.

A number of preferred embodiments of the present invention will now be described by way of example only and with reference to the accompanying drawings, in which:
Figure 1 shows schematically a system and method for providing information, content or the like to one or more mobile communications devices in accordance with preferred embodiments of the present invention; and
Figure 2 shows schematically the system and method of figure 1, with a skin applied to the communication means that comprises an application, in accordance with preferred embodiments of the present invention.

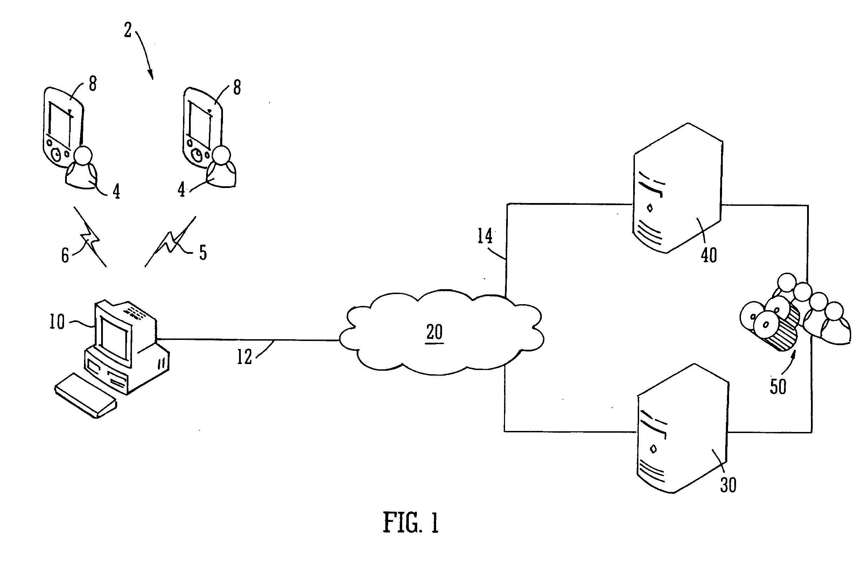

Figure 1 shows schematically a system 2 for providing information, including content such as multimedia files, etc., to mobile communications devices 8. In this figure two users 4 are shown, each having a mobile phone 8 with multimedia capabilities. Of course the system 2 is applicable to one user, two users or more and is not restricted to a mobile phone 8 but rather could be applicable to any, portable, communications device, preferably small, handheld or "pocket-sized" devices, such as PDAs, Blackberry or other smartphone devices, etc. Each user 4 has access to one or more computing devices 10. In figure 1 the computing device 10 comprises a personal computer (PC), but of course any suitable device (laptop, MAC, etc.) could be used. The mobile phones 8 are capable of communicating with the PC 10 using known communications protocols and means. For example the mobile phones 8 may be able to carry out any one or more of Bluetooth, NFC, IrDA, Wi-Fi, MMS, WAP, USB, etc., communications. In the embodiment of figure 1, one mobile phone 8 carries out Bluetooth communications 5 whilst the other mobile phone 8 carries out IrDA communications 6.

The PC 10 has access via communications means 12 to a wide area network, in this embodiment comprising the Internet 20. The PC 10 has numerous applications stored thereon that can be activated as the users 4 desire. For example PC 10 comprises one or more standard Internet browsing applications, such as Firefox, Internet Explorer, Safari, etc., by which the user 4 can browse any available websites on the Internet 20.

In accordance with preferred embodiments of the present invention a user 4 wishes to view the website(s) of a particular business. The websites are hosted by the business and are stored on their customer server 30, which is connected by communications means 14 to the Internet 20 and is freely accessible in this embodiment by PC 10 and thus by user 4. For ease of explanation the business in this example comprises a car manufacturer and retailer but of course any business, enterprise or the like, is envisaged within the embodiments of the present invention.

The user 4 decides to access the website of the car dealer because they are considering purchasing a car. The user 4 may, for example, run one or more applications from the website, such as a car specification configurator, or may wish to view a gallery of images of the car of interest, or may wish to see pricing options, etc. If the user 4 finds a particular configuration of interest, they may wish to store the information for future reference, for example when they intend to visit the car dealer. This can be achieved in a known manner, for example by copying and saving the information from the website to the local PC 10. However this does not enable the user 4 to refer to the information anywhere other than at the PC 10. The user 4 could attempt to download the information to their mobile phone 8 themselves, but it is likely that this will be time consuming and the information will not be in a suitable format for viewing on the mobile phone 8.

In accordance with embodiments of the present invention there is provided on the car dealer's website, one or more links, buttons or other means that a user 4 can select (e.g. by pointing the cursor on the PC 10 with the mouse and clicking on the option) to request the desired information to be automatically transmitted to their mobile phone 8 in a format that is receivable and viewable by the mobile phone 8 and preferably without any further interactions required by the user 4 (although on first use, some interaction may be required as explained below).

In preferred embodiments this is achieved by, in response to the user 4 clicking or otherwise selecting the "download information" option, the customer server 30 attempting to send to the PC 10 one or more relevant files containing the required information and that are preferably stored at the customer server 30.

Preferably the information, files etc., are sent to a specific communication means or application on the PC 10, that is capable of receiving the files and automatically transmitting them in a suitable form (or modifying, enhancing, etc., them to be in a suitable form) to the mobile phone 8 that has requested the information. However in the event that the PC 10 does not comprise an appropriate application, then in accordance with preferred embodiments of the present invention the user 4 is offered the opportunity to obtain the appropriate application. For example a "pop-up" box may automatically appear on the PC 10 (sent either by the customer server 30 and/or by a systems administration server 40) enabling the user 4 to agree to download the appropriate application to the PC 10.

Alternatively the user may be directed to a suitable website such that the application can be downloaded. The application is then preferably supplied over the Internet 20 from either the customer server 30 or the systems administration server 40, either or both of which may store an appropriate application for this purpose. The user 4 can then either run and follow an installation wizard to install the application, or the application could be automatically installed in the PC 10.

If the appropriate application is present on the PC 10, then in response to the user 4 requesting to download information to their mobile phone 8, the application preferably automatically runs on the PC 10. Preferably a "pop-up" box or other appropriate means is displayed on the PC 10 informing the user 4 that the information is being retrieved and automatically sent or "pushed" to their mobile phone 8 (although they could in some embodiments be requested to confirm that the download should proceed). In preferred embodiments, the information (content etc.) is displayed or partially displayed (e.g. a preview is provided) whilst the information, content, etc., is being pushed to the user, or this can occur before the information, content, etc. is pushed.

The application is configured such that it is capable of retrieving or requesting the desired information from the customer server 30 and when that information is received, automatically configuring the information and sending it by appropriate means to the mobile phone 8. For example the application may determine that the mobile phone 8 has Bluetooth and IrDA communications means, and the application may attempt initially to send the information by the most suitable means, e.g. by Bluetooth.

The application may also modify, configure or otherwise enhance the information before it is sent to the mobile phone 8. For example the application on the PC 10 may determine the type of mobile phone 8 and may configure the information to be appropriately received and displayed on the particular type of mobile phone 8 (e.g. for audio data the application may determine whether it should be sent in mono or stereo format, for video data or images, the application may resize and/or otherwise modify the data for viewing on the particular size and resolution of the screen of the mobile phone 8, etc.).

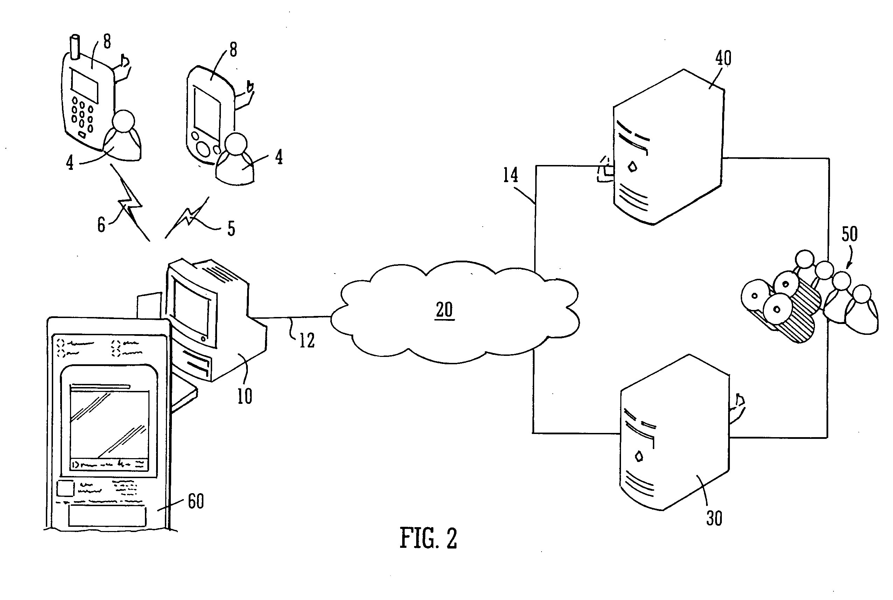

In preferred embodiments the application may also apply visual and/or audio elements to the information before transmitting the information to the mobile phone 8. For example the application may contain a default "skin" or "theme", for example set by the systems administration server 40 that enhances the information to be viewed by the user 4 and may, for example, show advertisements for the system. Additionally or alternatively the customer server 30 may store a customised skin that is sent to the application on the PC 10 prior to sending the information. The application can then enhance the information with the skin before sending the information to the mobile phone 8 and/or the application itself may be enhanced with the skin. Thus, for example, the application pop-up box can be configured to display information with a background or animation chosen by the customer, or with any other visual or audio enhancements, etc. For example in the car dealer embodiment, the car dealer's advertising music could play when the box pops-up and the box may show the dealer's icon and be presented in the dealer's colours, etc. An embodiment of the present invention is shown in figure 2, in which a skin 60 is applied to the application. The system is essentially the same as the figure 1 embodiment, with like reference numerals applied to like features. The application is displayed on the PC 10 and the user 4 interacts with the application, for example to select content for transmission to their mobile phone 8. The application is configured visually and/or audibly such that it appears with a skin 60 that relates, for example, to the requested content, the provider of the requested content, or any other suitable template. Thus the user 4 is presented with customised, attractive and informative content at their PC 10 via the application. The skin 60 is preferably also applied to any content received at the mobile phone 8 for viewing by the user 4.

When the information is suitable for receipt by the mobile phone 8 the application transmits it to the phone 8 and the user 4 can view the information at their leisure. For example the user 4 can access the information when they are in the car dealer's premises to show the exact configuration of car that they want. All this is achieved without the need for the mobile phone 8 to connect directly to the customer server 30 and thus avoids the potentially costly, cumbersome, restricted and slow communications that the mobile phone 8 might otherwise require to obtain this information.

The above embodiments may be freely available to the end user 4 or in preferred embodiments the amount of information that can be sent to mobile phones 8 from a particular customer server 30 is restricted based for example on the type of agreement the customer has with the system administrator. For example the systems administration server 40 may issue licences to the customer server to enable a certain number and/or amount of downloads to be made, for example in a period of time (e.g. per 24 hours). The licences may be free or enhanced licences could, for example, be purchased. The system is monitored and controlled by the systems administration server 40 that can take payments for further licences as desired.

The systems administration server 40 preferably also controls the application for the PCs 10 and, for example, may enable the application to be modified and enhanced by other users (e.g. the application might be "open source").

The user 4 not only can download information to their mobile phone 8 with minimal effort and cost, but in preferred embodiments at least the user 4 can interact with the information received at their mobile phone 8 and can, for example, upload information to the customer server 30 and/or the system administration server 40 either directly or via the PC 10.

For example, if the user 4 configures a car that they wish to purchase and downloads the configured car to their mobile phone 8, then they may subsequently wish to upload the car to the dealer's website, or to a car community newsgroup for other users 4 to view. etc. In preferred embodiments, the information sent to the mobile phone 8 is configured such that any uploads subsequently carried out are automatically directed to the correct destination. For example the information may contain a direct link to the customer server 30, or a direct link back to the PC 10 and instructions to cause the application of the PC 10 to automatically upload the information to the customer server 30 and the related information to do so (e.g. the server 30 IP address or the like).

Details and information relating to any of the above steps of any of the embodiments may be reported to the systems administration server 40 for analysis, storage and other uses for improving and controlling the system 2.

It can be seen from the above that the present invention, in its preferred embodiments at least, provides a method and system for providing information to a mobile communications device of a user that requires minimal interaction by the user, is quick, reliable and can customise the information and furthermore that does not necessarily require the mobile communications device to make costly connections to the mobile communications device service provider. Furthermore the user can interact with the information provided at any time and place desired.

## Claims

1. A method of providing information to a mobile communications device, the method comprising the steps of:
providing selection means for enabling selection of information;
providing information from information providing means to a communications means in response to activation of the selection means; and
automatically transmitting further information from the communications means to a mobile communications device.

2. The method of claim 1, wherein the communications means comprises an application for use with a computer or other device.

3. The method of claim 2, further comprising the step of:
providing or offering to provide the application to a computer or other device in response to activation of the selection means and/or in response to the step of providing information from the information providing means to the communications means.

4. The method of claim 3, wherein the step of offering to provide the application comprises:
providing directions to the computer or other device to a source of the application; and
enabling the application to be downloaded or otherwise transmitted from the source to the computer or other device; and/or the method further comprising the step of:
activating the application on the computer or other device in response to activation of the selection means and/or in response to the step of providing information from the information providing means to the communications means.

5. The method of any preceding claim, wherein the step of automatically transmitting further information from the communications means to a mobile communications device comprises pushing, or otherwise providing without further interaction, the further information to the mobile communications device.

6. The method of any preceding claim, further comprising the step of:
the communications means modifying, optimising and/or otherwise enhancing the further information prior to automatic transmission to the mobile communications device; preferably wherein the step of modifying, optimising and/or otherwise enhancing the further information comprises modifying, optimising and/or otherwise enhancing the information for compatibility with the mobile communications device in response to information determined about the mobile communications device.

7. The method of any preceding claim, wherein the step of automatically transmitting further information from the communications means to a mobile communications device comprises pushing the further information to any mobile communications device within proximity of the communications means.

8. The method of any preceding claim, wherein the further information comprises an application for a mobile communications device, the method further comprising the steps of:
activating the application on the mobile communications device, the application containing address means or other pointer or bookmark to the information providing means;
transmitting information from the mobile communications device to the information providing means via the communication means using the address means or other pointer or bookmark to direct the transmission.

9. The method of any preceding claim, wherein the further information automatically transmitted to the mobile communications device comprises an application for enabling mobile transactions.

10. A system for providing information to a mobile communications device, comprising:
selection means for enabling selection of information;
communication means comprising automatic transmission means; and
information providing means for providing information to the communications means in response to activation of the selection means,
wherein the automatic transmission means is configured to automatically transmit further information to a mobile communications device in response to activation of the selection means and/or in response to provision of information to the communications means.

11. The system of claim 10, wherein the communications means comprises an application for use with a computer or other device.

12. The system of claim 10 or 11, wherein the information provided by the information providing means and/or transmitted by the communications means is modified, optimised and/or otherwise enhanced by the communications means prior to automatic transmission to the mobile communications device.

13. The system of any of claims 10 to 12, wherein the automatic transmission means is configured to automatically transmit further information to one, more than one or any mobile communications device within proximity of the communications means; preferably wherein the automatic transmission means is configured to automatically transmit further information to one, more than one or any mobile communications device within 10 metres or less of the communications means.

14. The system of any of claims 10 to 13, wherein the further information comprises an application for a mobile communications device that contains address means or other pointers or bookmarks to the information providing means such that information transmitted from the mobile communications device to the information providing means via the communication means is directed by the address means or other pointer or bookmark.

15. The system of any of claims 10 to 14, wherein the further information automatically transmitted to the mobile communications device comprises an application for enabling mobile transactions.
